# EUROPÄISCHE PATENTSCHRIFT

(11) **EP 2 945 245 B1**
(45) Veröffentlichungstag und Bekanntmachung des Hinweises auf die Patenterteilung: **08.08.2018**
(21) Anmeldenummer: 14168654.3
(22) Anmeldetag: 16.05.2014
(51) Int. Cl.: H02J 3/01, H02J 3/16, H02J 3/18, H02J 3/24, H02J 3/00

(54) **Verfahren und Vorrichtung zum Reduzieren von Spannungsschwankungen in einem Versorgungsnetz**
Method and device for reducing power fluctuations in a power supply network
Procédé et dispositif de réduction de fluctuations de tension dans un réseau d'alimentation

(43) Veröffentlichungstag der Anmeldung: 18.11.2015
(73) Patentinhaber: Siemens Aktiengesellschaft, 80333 München (DE)
(72) Erfinder: Pinkwart, Jonas, 90768 Fürth (DE); Wong, Kwok Tung, 90617 Puschendorf (DE); Pieschel, Martin, 90473 Nürnberg (DE)

(56) Entgegenhaltungen:
- CN-A- 101 335 456
- US-A1- 2005 194 944
- US-A1- 2011 181 044
- US-B1- 6 359 423
- D. Michel ET AL: "Mixed topology for flicker mitigation", Second IEE International Conference on Power Electronics, Machines and Drives, vol. 2004, 1 January 2004 (2004-01-01), pages v1-253, XP055434598, DOI: 10.1049/cp:20040294 ISBN: 978-0-86341-383-4
- J. TURUNEN ET AL: "Power quality support for industrial load using hybrid SVC", 22ND INTERNATIONAL CONFERENCE ON ELECTRICITY DISTRIBUTION, vol. 5555, 1 January 2013 (2013-01-01), pages 1045-1045, XP055434610, DOI: 10.1049/cp.2013.1049 ISBN: 978-1-84919-732-8

## Beschreibung

Die vorliegende Erfindung betrifft ein Verfahren zum Reduzieren von Spannungsschwankungen in einem Versorgungsnetz, die durch Betreiben einer Last an dem Versorgungsnetz verursacht werden. Dabei wird ein in die Last fließender Strom gemessen, womit ein entsprechendes Strommesssignal erhalten wird. Spannungsschwankungen werden mit Hilfe eines TCR (thyristor controlled reactor), der eine thyristorgesteuerte Reaktanz darstellt, und mit Hilfe eines VSC (voltage source converter), der einen spannungsgeführten Stromrichter darstellt, vorzugsweise unter Verwendung von Filterkreisen, die fest angeschlossen sind, reduziert. Darüber hinaus betrifft die vorliegende Erfindung eine entsprechende Kompensationsvorrichtung.

Hochleistungsöfen (z. B. Lichtbogenöfen) zeichnen sich dadurch aus, dass sie starke Leistungsschwankungen besitzen. Diese Leistungsschwankungen wirken sich auf das entsprechende Versorgungsnetz aus. Aus der Dissertation von T. Ellinger: "Entwicklung eines hybriden Kompensatorkonzepts für einen Drehstromlichtbogenofen", TU Ilmenau, 2. April 2004 sind entsprechende Möglichkeiten zur Kompensation der durch einen Ofen verursachten Störungen basierend auf einem hybriden Filterkonzept bekannt. Der aktive Teil des Kompensators besteht aus einem thyristorgesteuerten Blindstromsteller (TCR-Anlage) sowie einem parallelen aktiven Filter. Die TCR-Anlage übernimmt die Kompensation der Grundschwingungsblindleistung des Ofens. Sie ist außerdem für die Flickerminderung zuständig. Zur Kompensation der Verzerrungsblindleistung des Gesamtsystems kommt ein aktives Filter zur Anwendung.

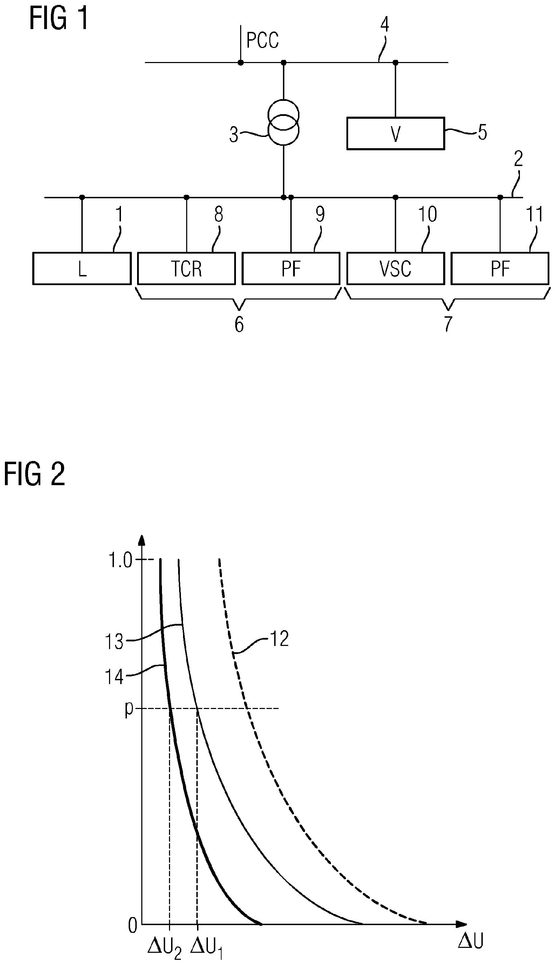

Intern ist ein Leistungssystem gemäß FIG 1 mit einem elektrischen Lichtbogenofen als stark schwankende Last 1 bekannt. Die Last 1 wird beispielsweise über ein Mittelspannungsnetz 2 (z. B. 10 bis 35 kV) gespeist. Das Mittelspannungsnetz 2 seinerseits wird über einen Abspanntrafo 3 an einem Hochspannungsnetz 4 versorgt. Der Anschluss erfolgt an einem sogenannten "Point of Common Coupling" PCC des Hochspannungsnetzes. An dem Hochspannungsnetz 4 ist symbolisch ein weiterer Verbraucher (V) 5 angeschlossen.

Zur Kompensation bzw. Reduktion von Spannungsschwankungen in dem Mittelspannungsnetz 2 und damit auch in dem Hochspannungsnetz 4 sind an das Mittelspannungsnetz 2 neben der Last 1 ein sogenannter SVC 6 (static VAR compensator, d.h. ein Blindleistungskompensator) und ein STATCOM 7 (static synchronous compensator, d.h. ein Stromrichter im Pulsbetrieb zum Erzeugen von induktiver oder kapazitiver Blindleistung) gekoppelt. Der SVC 6 umfasst hier einen TCR 8 und eine passive Filterschaltung 9. Sowohl der TCR 8 als auch die passive Filterschaltung 9 sind direkt an das Mittelspannungsnetz 2 angeschlossen.

Der STATCOM 7 umfasst einen VSC 10 (voltage source converter; d.h. spannungsgeführter Stromrichter) sowie ebenfalls eine passive Filterschaltung 11. Sowohl der VSC 10 als auch die passive Filterschaltung 11 sind direkt an das Mittelspannungsnetz 2 gekoppelt. Damit liegen sie zusammen mit TCR 8 und passiver Filterschaltung 9 parallel zur Last 1.

Wie oben angedeutet wurde, sind die großen, beispielsweise bei Hochleistungsöfen auftretenden Lastschwankungen am Kopplungspunkt PCC durch ein Kompensationssystem zu kompensieren. Ein derartiges Kompensationssystem wäre ein SVC 6, der einen TCR 8 und ein harmonisches Filter bzw. ein Set von harmonischen Filtern 9 beinhaltet und seit über 30 Jahren bekannt ist. Ein solcher SVC 6 ist geeignet, Störungen von sich langsam ändernden Lasten zu reduzieren. Wenn sich die Lasten jedoch rasch ändern, können SVCs Spannungsstörungen nur unzureichend reduzieren. Anstelle eines TCR 8 wird dann typischerweise ein VSC 10 eingesetzt. Letzterer ist nicht von den Zündverzögerungen von Thyristoren abhängig und reagiert somit rascher. Zudem hat er keine Totzeit, die durch die Eigenschaft der Thyristoren bedingt ist, nur ein- aber nicht ausschalten zu können. Allerdings ist er in der Regel deutlich teurer.

Der Kompensationseffekt und damit die Reduktion der Spannungsschwankungen U ist in FIG 2 angedeutet. Dort sind Kurven 12, 13 und 14 der Wahrscheinlichkeit p über den Spannungsschwankungen U aufgezeichnet. Die Kurve 12 zeigt die Wahrscheinlichkeit von Spannungsschwankungen ohne Kompensation. Die Kurve 13 gibt die Wahrscheinlichkeit von Spannungsschwankungen wieder, wenn mit einem einzigen SVC (bzw. TCR), welcher für langsame Lastwechsel geeignet ist, kompensiert wird. Schließlich gibt die Kurve 14 die Wahrscheinlichkeit von Spannungsschwankungen bei Kompensation mit einem einzigen STATCOM (bzw. VSC-Filterkombination), der für schnelle Lastwechsel geeignet ist, wieder. Dabei gibt die einzelne Wahrscheinlichkeit p wieder, dass eine Spannungsschwankung einen vorbestimmten U-Wert übersteigt.

Für die gleiche Nennleistung liegt das Kostenverhältnis von VSC zu TCR und zu passiven Filterschaltungen in etwa bei 4:1:1. Das Verhältnis der Leistungsfähigkeiten eines Systems mit einem VSC zu dem mit einem TCR liegt etwa bei 2:1, was in etwa dem Verhältnis U1: U2 von FIG 2 entspricht.

FIG 2 zeigt also die Spannungsschwankungen und ihre Wahrscheinlichkeiten. Beispielsweise liegt die Wahrscheinlichkeit dafür, dass die Spannungsschwankung höher als U1 ist gemäß Kurve 13 bei Einsatz eines einzigen SVC bei p. Bei Einsatz eines einzigen STATCOM liegt die Spannungsschwankung bei gleicher Wahrscheinlichkeit über U2. Dies bedeutet, dass der STATCOM 7 leistungsfähiger ist als der SVC 6.

Klarstellend sei darauf hingewiesen, dass FIG 2 nicht zeigt, dass jede durch Messungen aufgenommene Spannungsschwankung eine Schwankungsfrequenz besitzt, die zwischen 0,5 Hz und 25 Hz liegt. Generell bedeutet die Schwankungsfrequenz die Anzahl der Zyklen pro Sekunde, in denen die Spannung ansteigt und abfällt. Ein SVC reagiert auf Lastschwankungen bis zu einer Schwankungsfrequenz von 5 Hz gut, mit gewissem Erfolg auch zwischen 5 und 10 Hz. Seine Leistungsfähigkeit oberhalb von 10 Hz ist jedoch gering. Ein STATCOM hingegen reagiert im gesamten Schwankungsfrequenzbereich gut auf Lastschwankungen. Am strengsten ist die Toleranz bezüglich Spannungsschwankungen bei etwa 9 Hz, da das Auge bzw. Gehirn am stärksten auf Beleuchtungsschwankungen in diesem Frequenzbereich reagiert. Da der STATCOM nicht nur in diesem Frequenzbereich sondern generell dem SVC überlegen ist, liegt die Kurve des STATCOM links von derjenigen des SVC in FIG 2.

Falls die Last geringfügig über der Belastbarkeit eines STATCOM liegt, würde die Kurve 14 des STATCOM in FIG 2 geringfügig nach rechts wandern, so dass der Störungsgrenzwert unter Umständen nicht erreicht wird. Um die Kurve wieder nach links zu schieben und den Grenzwert zu erreichen, ist es notwendig, die Belastbarkeit des Kompensationssystems zu erhöhen. Dabei besteht ein Kostenvorteil, wenn die Leistungsfähigkeit des Kompensationssystems mit einem TCR 8 anstelle eines zweiten VSC 10 erhöht wird. In einem solchen Fall ist es wichtig, dass der TCR und der VSC in koordinierter Art und Weise betrieben werden, um das beste Leistungsergebnis zu erzielen.

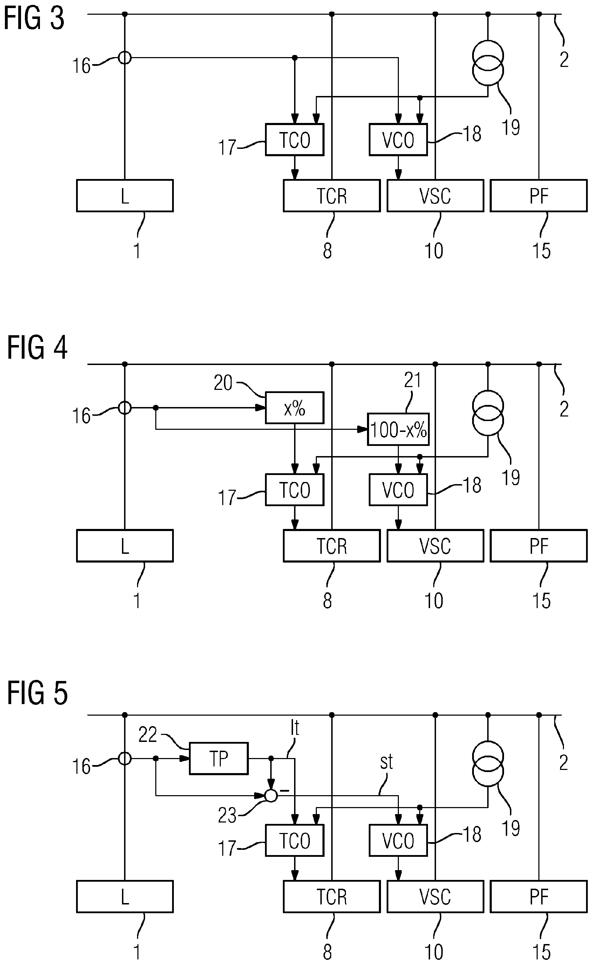

Gewisse kombinierte Betriebsarten von TCR, VSC und passiven Filterschaltungen sind bereits bekannt. Beispielsweise können der TCR und der VSC unabhängig voneinander betrieben werden, was in FIG 3 dargestellt ist. Von der Grundstruktur entspricht das in FIG 3 dargestellte System demjenigen von FIG 1. Es ist jedoch auf die Darstellung des Hochspannungsnetzes 4 aus Gründen der Einfachheit verzichtet. An dem Mittelspannungsnetz 2 ist die Last 1 angeschlossen. Parallel dazu ist der TCR 8, der VSC 10 und eine passive Filterschaltung 15 an das Mittelspannungsnetz 2 angeschlossen. Grundsätzlich ist es jedoch nicht von Bedeutung, wie hoch die Spannung in dem Netzwerk 2 ist.

FIG 3 zeigt die Steuerung bzw. Regelung der TCR-VSC-Kombination zusammen mit der Filterschaltung 15 näher. Dabei ist es vorteilhaft, aber nicht zwingend, dass die Filterschaltung 15 passiv ist.

Mit einem Strommesser 16 wird der Strom gemessen, der in die Last 1 von dem Mittelspannungsnetz 2 fließt. Ein entsprechendes Strommesssignal wird einer TCR-Steuereinheit 17 (TCO) und einer VSC-Steuereinheit 18 (VCO) zugeführt. Beide Steuereinheiten 17 und 18 erhalten außerdem Spannungsmesssignale von einem Spannungsmesser 19 bezüglich der Spannung im Mittelspannungsnetzwerk 2. Aus den Strom- und Spannungsmesssignalen generiert die TCR-Steuereinheit 17 ein Steuersignal für den TCR 8 und die VSC-Steuereinheit 18 ein Steuersignal für den VSC 10.

In dem Beispiel von FIG 3 arbeiten der TCR 8 und der VSC 10 unabhängig voneinander. Ein vorbestimmter Bruchteil des Laststroms wird durch den TCR kompensiert und der Rest durch den VSC 10. Dieses Verfahren nutzt nur teilweise die rasche Reaktionsfähigkeit des VSC 10 und führt daher zu suboptimalen Ergebnissen.

In einer Weiterbildung gemäß FIG 4 wird der VSC 10 als aktives Filter genutzt. Der TCR 8 reduziert die Grundschwankungen der Spannung, während der VSC 10 nur die Harmonischen beseitigt. Die Grundstruktur dieses Systems ist in FIG 3 wiedergegeben, weshalb auf die dortige Beschreibung verwiesen wird. Zusätzlich ist in dem Beispiel von FIG 4 jedoch vorgesehen, dass das Strommesssignal aufgeteilt wird. Ein gewisser Anteil, nämlich x Prozent des Messwerts, wird der TCR-Steuereinheit 17 zugeführt. Dafür kann beispielsweise ein Multiplizierer 20 genutzt werden. Ein weiterer Multiplizierer 21 übermittelt den Rest des Stromstärkewerts im Strommesssignal an die VSC-Steuereinheit 18, welche ihrerseits ein entsprechendes Steuersignal an den VSC 10 abgibt. Zur weiteren Funktionalität des Systems wird auf die Beschreibung von FIG 3 hingewiesen.

Aus der US 2011/0181044 A1 ist ferner ein Verfahren zur Kompensation von Blindleistung bekannt, bei dem ein TCR und ein VSC eingesetzt werden.

Aus dem Beitrag von D. Michel et al. "Mixed Topology For Flicker Mitigation", international conference on power electronics, ist ein Verfahren zur Flickerkompensation mittels einer Kombination eines klassischen SVC und eines STATCOM bekannt, bei dem der SVC eine Kompensation von Frequenzanteilen unterhalb einer festen Frequenzschwelle von 15 Hz und der STATCOM die Kompensation der übrigen Frequenzanteile übernehmen.

In dem Beitrag von J. Turunen et al. "Power Quality Support for Industrial Load Using Hybrid SVC" ist ein Verfahren zur Flickerkompensation mittels einer Kombination eines TCR und eines STATCOM beschrieben, bei dem, zur Vermeidung der gegenseitigen Beeinträchtigung des TCR und des STATCOM das Hochspannungsnetz derart ausgelegt wird, dass am Verbindungspunkt zum STATCOM keine Resonanzfrequenzen auftreten, die nahe an einer Harmonischen liegen.

Die CN 101 335 456 A offenbart ein System zur Blindleistungskompensation mittels einer Kombination eines TSC und eines STATCOM. Die Regelung des bekannten Systems ist derart ausgestaltet, dass der vorgegebene Sollstrom in einen ersten Sollstromanteil und einen zweiten Sollstromanteil zerlegt wird, wobei der TSC mittels des ersten und der STATCOM mittels des zweiten Sollstromanteils gesteuert werden.

Die Lastschwankungen können sich dynamisch verändern. Damit sind die bekannten Systeme überfordert und es können keine optimalen Kompensationen speziell in einem Lastbereich erzielt werden, die noch keine zwei VSCs erfordern.

Die Aufgabe der vorliegenden Erfindung besteht somit darin, ein Verfahren und eine Kompensationsvorrichtung bereitzustellen, mit denen es möglich ist, eine Reduktion von Spannungsschwankungen effizienter mittels eines TCR und VSC zu erreichen.

Erfindungsgemäß wird diese Aufgabe gelöst durch ein Verfahren zum Reduzieren von Spannungsschwankungen in einem Versorgungsnetz, die durch Betreiben einer Last an dem Versorgungsnetz verursacht werden, durch
- Messen eines in die Last fließenden Stroms, womit ein entsprechendes Strommesssignal erhalten wird,
- Reduzieren der Spannungsschwankungen mit Hilfe eines TCR, der eine thyristorgesteuerte Reaktanz darstellt, und
- Reduzieren der Spannungsschwankungen mit Hilfe eines VSC, der einen spannungsgeführten Stromrichter darstellt,
sowie
- Aufteilen des Strommesssignals oder einer entsprechenden Größe in Abhängigkeit von einem vorgegebenen absoluten Grenzwert in einen ersten Anteil und einen zweiten Anteil,
- Steuern des TCR anhand des ersten Anteils und
- Steuern des VSC anhand des zweiten Anteils.

In vorteilhafter Weise wird also die Kompensation parallel durch einen TCR und einen VSC erzielt, wobei beide dynamisch angesteuert werden. Es wird also nicht jeweils vom TCR und VSC ein starrer Anteil von Blindleistung zur Kompensation bereitgestellt, sondern der jeweilige Anteil wird abhängig von der Natur des Strommesssignals, das den in die Last fließenden Strom repräsentiert, gesteuert. Dabei wird ein vorgegebener absoluter Grenzwert benutzt, anhand dessen das Strommesssignal analysiert wird. Entsprechend dem Analyseergebnis werden TCR und VSC gesteuert.

Gemäß der Erfindung repräsentiert der vorgegebene absolute Grenzwert eine Grenzfrequenz. Damit werden die Spannungsschwankungen nach ihrer Frequenz kategorisiert. Anteile mit höherer Frequenz können somit anders behandelt werden als Anteile mit niedrigeren Frequenzen.

Speziell liegen alle Frequenzen des ersten Anteils unter der Grenzfrequenz und alle Frequenzen des zweiten Anteils oberhalb der Grenzfrequenz. Niederfrequente Anteile des Strommesssignals werden somit zur Steuerung des TCR verwendet, wohingegen hochfrequente Anteile des Strommesssignals zur Steuerung des VSC herangezogen werden. Die Grenzfrequenz liegt zwischen 0 und 8 Hz, vorzugsweise zwischen 1 und 5 Hz. Auf diese Weise kann gewährleistet werden, dass die Anteile bei etwa 9 Hz, auf die der menschliche Organismus bei Beleuchtungen sehr empfindlich reagiert, effizient durch den VSC reduziert werden.

Die obige Aufgabe wird erfindungsgemäß auch gelöst durch eine Kompensationsvorrichtung zum Reduzieren von Spannungsschwankungen in einem Versorgungsnetz, die durch Betreiben einer Last an dem Versorgungsnetz verursacht werden, mit
- einer Messeinrichtung zum Messen eines in die Last fließenden Stroms, womit ein entsprechendes Strommesssignal bereitstellbar ist,
- einem TCR, der eine thyristorgesteuerte Reaktanz darstellt, zum Reduzieren der Spannungsschwankungen und
- einem VSC, der einen spannungsgeführten Stromrichter darstellt, zum Reduzieren der Spannungsschwankungen,
weiterhin umfassend
- eine Splittereinrichtung zum Aufteilen des Strommesssignals oder einer entsprechenden Größe in Abhängigkeit von einem vorgegebenen absoluten Grenzwert in einen ersten Anteil und einen zweiten Anteil,
- eine erste Steuereinrichtung zum Steuern des TCR anhand des ersten Anteils und
- eine zweite Steuereinrichtung zum Steuern des VSC anhand des zweiten Anteils.

In erfindungsgemäßer Weise erfolgt auch hier die Aufteilung des Strommesssignals oder der entsprechenden Größe in Abhängigkeit von einem vorgegebenen absoluten Grenzwert, also intelligent durch eine Splittereinrichtung. Damit lassen sich insbesondere hochdynamische Vorgänge mittlerer Leistung wirksamer hinsichtlich Spannungsglättung im Versorgungsnetz behandeln.

Auch hier weist die Splittereinrichtung einen Frequenzsplitter auf, und der vorgegebene absolute Grenzwert ist eine Grenzfrequenz des Frequenzsplitters. Damit ergeben sich die oben genannten Vorteile. Die Grenzfrequenz liegt zwischen 0 und 8 Hz.

Insbesondere kann die Splittereinrichtung einen Begrenzer aufweisen, der den vorgegebenen Grenzwert zum Begrenzen eines Ansteuerwerts für den VSC nutzt. So kann vor allem die Kapazität des VSC vollständig bzw. besser ausgenutzt werden.

Ferner kann das Versorgungsnetz mit einer Filterschaltung belastet sein, welche zum Reduzieren der Spannungsschwankungen mit dem TCR und dem VSC zusammenwirkt. Speziell kann die Filterschaltung passiv sein, kapazitiv wirken und auf den TCR sowie VSC abgestimmt sein. Somit kann eine kostengünstige Filterschaltung bereitgestellt werden, welche mit den Induktivitäten von TCR und VSC die von der Last hervorgerufenen Blindleistungen kompensiert.

Die vorliegende Erfindung wird nun anhand der beigefügten Zeichnungen näher erläutert, in denen zeigen:
- FIG 1: ein Versorgungssystem mit einer störenden Last, Kompensationsmitteln und anderen Verbrauchern;
- FIG 2: Wahrscheinlichkeitsverteilungen für Spannungsschwankungen, die oberhalb einer vorbestimmten Spannungsschwankung liegen;
- FIG 3: ein Regelungssystem mit einer Kombination aus TCR und VSC;
- FIG 4: ein Regelungssystem mit einem TCR zur Reduktion von Spannungsschwankungen und einem VSC zum Reduzieren von harmonischen Störungen;
- FIG 5: ein Schaltdiagramm einer erfindungsgemäßen Regelung von TCR und VSC durch Teilen der Aktivität von TCR und VSC anhand der Frequenz der Spannungsschwankungen;
- FIG 6: ein Diagramm von Wahrscheinlichkeiten von Spannungsschwankungen bei erfindungsgemäßen Regelungen;
- FIG 7: eine zu FIG 5 alternative Ausführungsform mit Begrenzer, die nicht Teil der beanspruchten Erfindung ist;
- FIG 8: eine Weiterentwicklung des Ausführungsbeispiels von FIG 7 mit einem weiteren Begrenzer; und
- FIG 9: eine zu FIG 5 alternative Ausführungsform mit TCR-Strommessung, die nicht Teil der beanspruchten Erfindung ist.

Das nachfolgend näher geschilderte Ausführungsbeispiel stellt die bevorzugte Ausführungsform der vorliegenden Erfindung dar. Für die Beschreibung dieser Ausführungsform wird ergänzend auf die obigen Erläuterungen zu den FIG 1 bis 4 verwiesen. Im Folgenden werden lediglich die Unterschiede näher herausgestellt.

Entsprechend der vorliegenden Erfindung ist ein Verfahren zum koordinierten Betreiben von TCR und VSC (bzw. SVC und STATCOM) vorgesehen. Dieses Verfahren betrifft Situationen, wo die Lastanforderungen über der Kompensationsfähigkeit eines einzigen STATCOM und unterhalb der Kompensationsfähigkeit von zwei STATCOMs liegt. Natürlich sind diese Verfahren nicht allein auf diese Situationen beschränkt.

Gemäß dem erfindungsgemäßen Beispiel, das prinzipiell in FIG 5 wiedergegeben ist, wird die Kompensationsanforderung in einen ersten langsamen Teil lt, der durch den TCR 8 zu kompensieren ist, und einen verbleibenden zweiten schnellen Teil st, der durch den VSC 10 zu kompensieren ist, geteilt. Die Teilung erfolgt durch eine Splittereinrichtung 22, 23, die hier einen Tiefpass (TP) 22 umfasst. Das Signal am Ausgang des Tiefpasses 22 weist nur noch die langsamen bzw. tieffrequenten Anteile lt des Strommesssignals auf. Das Signal lt dient als Eingangssignal für die TCR-Steuereinheit 17, welche also nur die langsamen Anteile des Strommesssignals zur Ansteuerung des TCR 8 heranzieht, neben dem Spannungsmesssignal vom Spannungsmesser 19 (vgl. Beschreibungen zu FIG 3 und 4). Der langsame Anteil lt am Ausgang des Tiefpasses 22 wird auch dem Subtrahierer 23 zugeführt, der diesen langsamen Anteil vom gesamten Strommesssignal subtrahiert, so dass der schnelle Anteil st resultiert. Mit diesem schnellen Anteil st wird die VSC-Steuereinheit (VCO) 18 angesteuert, die ebenfalls das Spannungsmesssignal von dem Spannungsmesser 19 erhält. Die VSC-Steuereinheit 18 steuert dann den VSC 10 in Abhängigkeit von dem langsamen Anteil lt des Strommesssignals an.

Die Grenzfrequenz der Splittereinrichtung liegt so, dass Strom- bzw. Spannungsschwankungen von 9 Hz und darüber in dem zweiten Anteil, nämlich dem schnellen Anteil st repräsentiert sind. Dementsprechend könnte die Grenzfrequenz beispielsweise bei 5 Hz liegen.

Im Betrieb der in FIG 5 dargestellten Kompensationsvorrichtung bzw. bei dem entsprechenden Verfahren wird also die rasche Reaktionsfähigkeit des VSC 10 ausgenutzt, um die kritischen 9 Hz-Lastschwankungen zu kompensieren. Dementsprechend wird der TCR 8 nur bei langsamen Lastschwankungen bemüht. Dies bedeutet, dass der TCR 8 aufgrund seines langsamen Zünd- und Löschverhaltens nur für die Kompensation von langsamen Schwankungen der Blindleistung herangezogen wird.

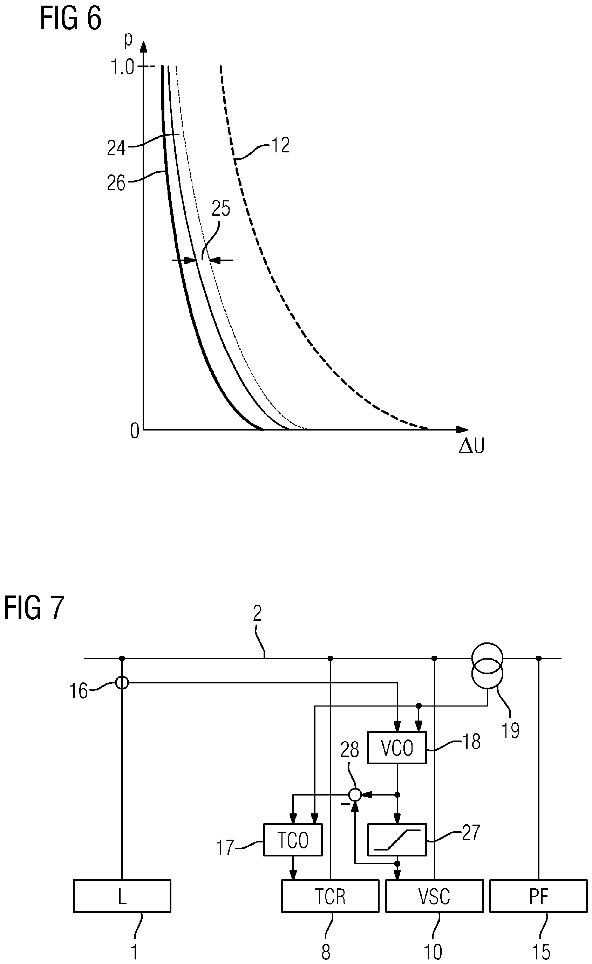

Eine Schätzung der Leistungsfähigkeit des Verfahrens bzw. der Kompensationsvorrichtung gemäß FIG 5 mit der Frequenzteilung kann FIG 6 entnommen werden. Die Wahrscheinlichkeit, dass eine Spannungsschwankung in einem fiktiven System größer als ein bestimmtes U ist, und keine Kompensation stattfindet, ergibt sich wie in FIG 2 durch die Kurve 12. Findet nun eine Kompensation gemäß dem obigen Verfahren mit Frequenzsplitting, d.h. mit einem TCR, einem VSC, einem Frequenzsplitter und einer passiven Filterschaltung, statt, so liegt die geschätzte Wahrscheinlichkeit in dem Bereich 24. Dementsprechend ergibt sich für das neue Verfahren eine geschätzte Bandbreite 25. Grundsätzlich wäre es natürlich wünschenswert, wenn durch den kombinierten Betrieb von SVC und STATCOM die gleiche Leistungsfähigkeit wie diejenige von zwei STATCOMs erreicht werden würde. Die Wahrscheinlichkeiten für Spannungsschwankungen bei Kompensation mit zwei STATCOMs ergibt sich aus Kurve 26. Nach dieser Graphik von FIG 6 liegen die Wahrscheinlichkeiten von Spannungsschwankungen mit der erfindungsgemäßen Kompensation zwar deutlich unter denen bei Systemen ohne Kompensation, aber doch noch geringfügig über den Wahrscheinlichkeiten bei Kompensation mit zwei STATCOMs.

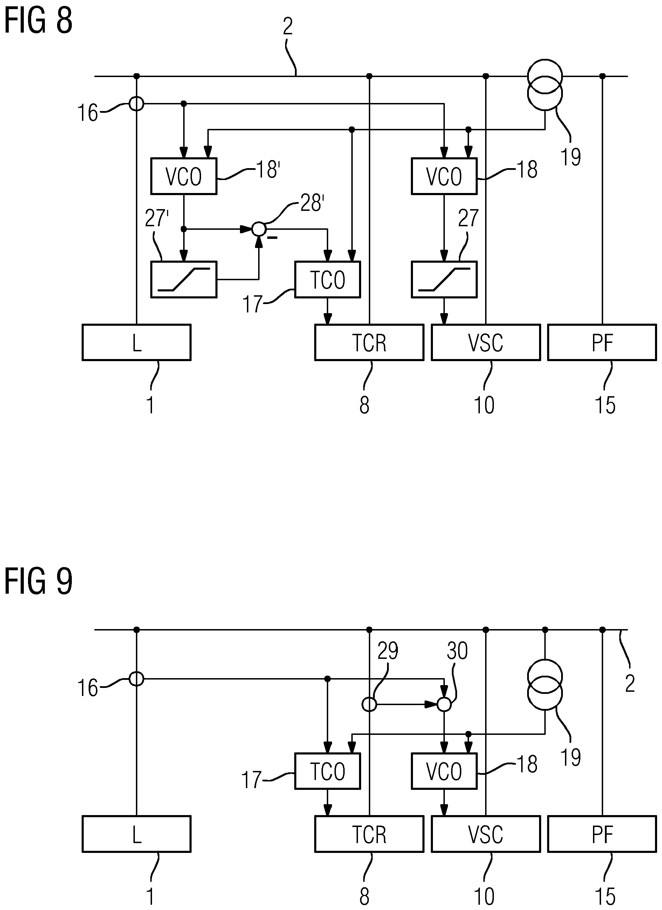

Die obigen Wahrscheinlichkeitskurven und insbesondere das Band 24 sowie die Bandbreite 25 gelten näherungsweise auch für das nachfolgend geschilderte zweite Verfahren bzw. die damit korrespondierende zweite Kompensationsvorrichtung in den Ausführungsbeispielen gemäß FIG 7 und 8, die nicht Teil der beanspruchten Erfindung sind. Hinsichtlich der Beschreibung der FIG 7 und 8 wird wieder auf die Beschreibung aller vorhergehenden FIG verwiesen, wo die gleichen Elemente aufgeführt sind. Die folgende Beschreibung konzentriert sich lediglich auf die Unterschiede. Bei dem zweiten Verfahren kompensiert der VSC 10 die Blindlast im Normalfall. Während dieser Phasen stellt der TCR 8 der kapazitiv wirkenden passiven Filterschaltung 15 eine konstante induktive Leistung entgegen. Der TCR 8 kompensiert nur dann, wenn der spannungsgesteuerte Stromrichter VSC 10 seine Ausgabegrenze erreicht.

Konkret wird dies in der Kompensationsvorrichtung gemäß FIG 7 dadurch erreicht, dass das Strommesssignal des Strommessers 16 der VSC-Steuereinheit 18 zur Verfügung gestellt wird. In Abhängigkeit davon und in Abhängigkeit von dem Spannungsmesssignal des Spannungsmessers 19 generiert die VSC-Steuereinheit 18 ein Steuersignal, welches einer Splittereinrichtung 27, 28 zugeführt wird. Die Splittereinrichtung umfasst hier einen Begrenzer 27. Das Steuersignal der VSC-Steuereinheit 18 repräsentiert das Strommesssignal bzw. stellt eine entsprechende Größe dar. Wenn also das Strommesssignal hoch ist, wird dies in dem Steuersignal der VSC-Steuereinheit 18 entsprechend repräsentiert. Der Begrenzer 27 sorgt für eine Begrenzung und gibt einen von ihm vorgegebenen Grenzwert aus, wenn der Wert des Steuersignals diesen Grenzwert überschreitet. Der VSC 10 wird dann nur mit dem Grenzwert angesteuert und läuft mit der vorgesehenen Maximalleistung.

Die Splittereinrichtung umfasst weiterhin einen Subtrahierer 28 der mit dem Steuersignal der VSC-Steuereinheit (VCO) 18 und dem Ausgangswert des Begrenzers 27 gespeist wird. Falls der Steuerwert der VSC-Steuereinheit 18 über dem Grenzwert liegt, ist die Differenz zwischen beiden Signalen positiv und dieser Differenzwert wird der TCR-Steuereinheit (TCO) 17 zur weiteren Ansteuerung des TCR 8 auch in Abhängigkeit von dem Spannungsmesssignal des Spannungsmessers 19 zugeführt. Ist hingegen der Wert des Steuersignals der VSC-Steuereinheit 18 kleiner als der Grenzwert des Begrenzers 27, so ist der Begrenzer 27 praktisch wirkungslos und steuert den VSC 10 mit dem Signal der VSC-Steuereinheit 18 an. Das Ausgangssignal des Subtrahierers 28 besitzt dann den Wert 0, da Ein- und Ausgangssignal des Begrenzers 27 gleich sind. Dementsprechend wird der TCR 8 so angesteuert, dass er keine Blindleistung kompensiert. Die Kompensation der Blindleistung erfolgt in diesem Fall also vollständig durch den VSC 10.

In einem bevorzugten Ausführungsbeispiel ist die kapazitiv wirkende, passive Filterschaltung 15 so ausgelegt, dass sie die induktive Ausgangsleistung von TCR 8 und VSC 10 vollständig entgegenwirken kann, wobei die konstante induktive Leistung des TCR 8 für den Normalfall berücksichtigt wird. Wenn nun der VSC 10 an seiner kapazitiven Grenze ist, vermindert der TCR 8 seine induktive Leistung was die kapazitive Anforderung an den VSC 10 entlastet. Das Zusammenspiel von VSC 10 und TCR 8 und umgekehrt ist fließend. Bei diesem zweiten Verfahren hält die meiste Zeit der VSC 10 die Spannungsschwankungen niedrig und die Auslegung des TCR 8 bzw. SVC kann entsprechend gering sein.

Zur Erhöhung der Zuverlässigkeit des Regelungssystems zur Reduktion der Spannungsschwankungen kann das System von FIG 7 mit einem weiteren Begrenzer optimiert werden, wie dies in FIG 8 dargestellt ist. Generell wird hier wieder auf die Beschreibung von dem System von FIG 7 hingewiesen. Speziell ist in dem nicht beanspruchten Aussführungsbeispiel von FIG 8 eine zusätzliche VSC-Steuereinheit 18' vorgesehen, die als Eingangssignal auch das Strommesssignal des Strommessers 16 sowie das Spannungsmesssignal des Spannungsmessers 19 wie die VSC-Steuereinheit 18 erhält. Das Ausgangssignal der VSC-Steuereinheit 18 wird hier wieder dem Begrenzer 27 zugeführt und das gegebenenfalls begrenzte Signal wird zum Ansteuern des VSC 10 verwendet. Für die Kompensation der Spitzenblindleistungen ist nun die parallele VSC-Steuereinheit 18' vorgesehen, deren Ausgangssignal sowohl einem zweiten Begrenzer 27'als auch einem Subtrahierer 28' zugeführt wird. Das Ausgangssignal des Begrenzers 27' wird in dem Subtrahierer 28' von dem Ausgangssignal der VSC-Steuereinheit 18' subtrahiert, und das resultierende Differenzsignal wird zur Ansteuerung der TCR-Steuereinheit 17 bzw. des TCR 8 verwendet. Es wird also nur dann von dem TCR 8 eine Leistung abgerufen, wenn der Wert des Steuersignals der VSC-Steuereinheit 18' über dem Grenzwert des Begrenzers 27' liegt. Vorzugsweise sind die Grenzwerte der beiden Begrenzer 27 und 27' gleich, sie müssen es aber nicht sein. Auch in diesem Fall bewältigt der VSC 10 also die Grundlast, während der TCR 8 die Spitzenlast übernimmt. Die Steuerung von TCR und VSC erfolgt hier jedoch durch separate Steuereinheiten, womit die Zuverlässigkeit erhöht werden kann. Die Koordination des Betriebs von SVC und STATCOM wird also dahingehend optimiert, dass die höchste Leistungsfähigkeit bei geringsten Kosten erreicht wird. Die Kompensationsleistung eines großen STATCOM ist besser als die eines konventionellen SVC-Systems. Lösungen, die jedoch nur auf STATCOMs basieren, sind viel teurer. Wenn eine Leistungsfähigkeit zwischen einem STATCOM und zwei STATCOMs ausreichend ist, liegt die kosteneffizienteste Lösung bei der Kombination von SVC und STATCOM. Ein unkoordinierter Betrieb würde jedoch die Leistungsfähigkeit schmälern.

Ein weiteres nicht beanspruchtes Ausführungsbeispiel zur Realisierung des Verfahrens bzw. der Kompensationsvorrichtung ist in FIG 9 gezeigt. Hinsichtlich der Beschreibung der FIG 9 wird wiederum auf die Beschreibung aller vorhergehenden FIGen verwiesen, wo die gleichen Elemente aufgeführt sind. Die folgende Beschreibung konzentriert sich lediglich auf die Unterschiede. Bei dem weiteren Verfahren gemäß FIG 9 kompensiert der VSC 10 das was der TCR nicht zu kompensiert schafft. Der Kompensationsbedarf liegt stets über der Leistungsfähigkeit des TCR. Daher muss der VSC immer den Kompensationsbedarf übernehmen, den der TCR nicht schafft. Dazu wird von dem Strommesser 16 wie in den vorangehenden Beispielen ein Strommesssignal bzw. Strommesswert gewonnen, das/der den Strom zwischen Last 1 und Versorgungsnetz 2 repräsentiert und hier als erstes Strommesssignal (Laststrommesssignal) verwertet wird. Die TCR-Steuereinheit 17 erhält hier als Strommesssignal das erste Strommesssignal in unveränderter Form. Sie erhält hier als Eingangssignale also das erste Strommesssignal direkt vom Strommesser 16 und das Spannungsmesssignal direkt vom Spannungsmesser 19.

Die VSC-Steuereinheit 18 hingegen erhält als Strommesssignal eine Summe aus dem ersten Strommesssignal (Laststrommesssignal) vom dem ersten Strommesser 16 und einem zweiten Strommesssignal (TCR-Strommesssignal) von einem zweiten Strommesser 29, welcher einen Strom zwischen dem Versorgungsnetz 2 und dem TCR 8 misst. Hierzu addiert ein Addierer 30 das erste Strommesssignal und das zweite Strommesssignal und liefert das Summensignal an die VSC-Steuereinheit 18. Letztere bezieht auch das Spannungsmesssignal von dem Spannungsmesser 19.

Die TCR-Regelung übernimmt also die Kompensation der Blindlast so gut sie kann. Der TCR 8 stellt der kapazitiv wirkenden passiven Filterschaltung 15 eine entsprechende induktive Leistung entgegen. Der VSC übernimmt die Kompensation der bleibenden Blindleistung, die der TCR nicht zu kompensieren schafft. Dazu wird die Summe des ersten Strommesssignals (Laststrom) und des zweiten Strommesssignals (TCR-Strom) der VSC-Regelung zugeführt. Der Kompensationsstrom des VSC 10 entspricht dann der Differenz des gesamten (kapazitiven) Filterstroms, der zwischen dem passiven Filter 15 und dem Versorgungsnetz 2 fließt, sowie des (induktiven) Laststroms zusammen mit dem (induktiven) TCR-Strom. Somit muss der VSC lediglich die Differenz bereinigen, die der TCR 8 nicht geschafft hat. Die Leistungsfähigkeit des Verfahrens fällt wieder in das Band 24 von FIG 6.

## Patentansprüche

1. Verfahren zum Reduzieren von Spannungsschwankungen in einem Versorgungsnetz (2), die durch Betreiben einer Last (1) an dem Versorgungsnetz (2) verursacht werden, durch
- Messen eines Stroms zwischen der Last (1) und dem Versorgungsnetz (2), womit ein entsprechendes Strommesssignal erhalten wird,
- Reduzieren der Spannungsschwankungen mit Hilfe eines TCR (8), der eine thyristorgesteuerte Reaktanz darstellt, und
- Reduzieren der Spannungsschwankungen mit Hilfe eines VSC (10), der einen spannungsgeführten Stromrichter darstellt,
- Aufteilen des Strommesssignals oder einer entsprechenden Größe in Abhängigkeit von einem vorgegebenen absoluten Grenzwert in einen ersten Anteil und einen zweiten Anteil,
- Steuern des TCR (8) anhand des ersten Anteils und
- Steuern des VSC (10) anhand des zweiten Anteils, wobei der vorgegebene absolute Grenzwert eine Grenzfrequenz repräsentiert, wobei alle Frequenzen des ersten Anteils unter der Grenzfrequenz und alle Frequenzen des zweiten Anteils oberhalb der Grenzfrequenz liegen, **dadurch gekennzeichnet, dass** die Grenzfrequenz zwischen 0 und 8 Hz liegt.

2. Kompensationsvorrichtung zum Reduzieren von Spannungsschwankungen in einem Versorgungsnetz (2), die durch Betreiben einer Last (1) an dem Versorgungsnetz (2) verursacht werden, mit
- einer Messeinrichtung zum Messen eines Stroms zwischen der Last (1) und dem Versorgungsnetz (2), womit ein entsprechendes Strommesssignal bereitstellbar ist,
- einem TCR (8), der eine thyristorgesteuerte Reaktanz darstellt, zum Reduzieren der Spannungsschwankungen und
- einem VSC (10), der einen spannungsgeführten Stromrichter darstellt, zum Reduzieren der Spannungsschwankungen,
- einer Splittereinrichtung (22, 23, 27, 28, 27', 28') zum Aufteilen des Strommesssignals oder einer entsprechenden Größe in Abhängigkeit von einem vorgegebenen absoluten Grenzwert in einen ersten Anteil und einen zweiten Anteil,
- einer ersten Steuereinrichtung (17) zum Steuern des TCR (8) anhand des ersten Anteils und
- einer zweiten Steuereinrichtung (18) zum Steuern des VSC (10) anhand des zweiten Anteils, wobei die Splittereinrichtung (22, 23, 27, 28, 27', 28') einen Frequenzsplitter aufweist, und der vorgegebene absolute Grenzwert eine Grenzfrequenz des Frequenzsplitters ist und alle Frequenzen des ersten Anteils unter der Grenzfrequenz und alle Frequenzen des zweiten Anteils oberhalb der Grenzfrequenz liegen, **dadurch gekennzeichnet, dass** die Grenzfrequenz zwischen 0 und 8 Hz liegt.

3. Verfahren nach einem der Anspruch 1, wobei eine Spannung des Versorgungsnetzes (2) gemessen wird, so dass das Reduzieren der Spannungsschwankungen auch in Abhängigkeit von der gemessenen Spannung erfolgt.

4. Kompensationsvorrichtung nach Anspruch 2, wobei das Versorgungsnetz (2) mit einer Filterschaltung (15) belastet ist, welche zum Reduzieren der Spannungsschwankungen mit dem TCR (8) und VSC (10) zusammenwirkt.

5. Kompensationsvorrichtung nach Anspruch 4, wobei die Filterschaltung (15) passiv ist, kapazitiv wirkt und auf den TCR (8) sowie VSC (10) abgestimmt ist.

## Claims

1. Method for reducing voltage fluctuations in a supply network (2), which are caused by operating a load (1) from the supply network (2), by
- measuring a current between the load (1) and the supply network (2), as a result of which a corresponding current measurement signal is obtained,
- reducing the voltage fluctuations with the aid of a TCR (8), and
- reducing the voltage fluctuations with the aid of a VSC (10),
- dividing the current measurement signal or a corresponding variable into a first portion and a second portion on the basis of a predefined absolute limit value,
- controlling the TCR (8) on the basis of the first portion, and
- controlling the VSC (10) on the basis of the second portion, the predefined absolute limit value representing a cut-off frequency, all frequencies of the first portion being below the cut-off frequency and all frequencies of the second portion being above the cut-off frequency, **characterized in that** the cut-off frequency is between 0 and 8 Hz.

2. Compensation device for reducing voltage fluctuations in a supply network (2), which are caused by operating a load (1) from the supply network (2), having
- a measuring device for measuring a current between the load (1) and the supply network (2), as a result of which a corresponding current measurement signal can be provided,
- a TCR (8) for reducing the voltage fluctuations, and
- a VSC (10) for reducing the voltage fluctuations,
- a splitter device (22, 23, 27, 28, 27', 28') for dividing the current measurement signal or a corresponding variable into a first portion and a second portion on the basis of a predefined absolute limit value,
- a first control device (17) for controlling the TCR (8) on the basis of the first portion, and
- a second control device (18) for controlling the VSC (10) on the basis of the second portion, the splitter device (22, 23, 27, 28, 27', 28') having a frequency splitter, and the predefined absolute limit value being a cut-off frequency of the frequency splitter and all frequencies of the first portion being below the cut-off frequency and all frequencies of the second portion being above the cut-off frequency.

3. Method according to Claim 1, a voltage of the supply network (2) being measured, with the result that the voltage fluctuations are also reduced on the basis of the measured voltage.

4. Compensation device according to Claim 2, the supply network (2) being loaded with a filter circuit (15) which interacts with the TCR (8) and the VSC (10) in order to reduce the voltage fluctuations.

5. Compensation device according to Claim 4, the filter circuit (15) being passive, acting capacitively and being tuned to the TCR (8) and the VSC (10).

## Revendications

1. Procédé de réduction de fluctuations de tension dans un réseau (2) d'alimentation, qui sont provoquées par le fonctionnement d'une charge (1) sur le réseau (2) d'alimentation par
- mesure d'un courant entre la charge (1) et le réseau (2) d'alimentation, en obtenant ainsi un signal de mesure du courant correspondant,
- réduction des fluctuations de tension à l'aide d'un TCR (8), qui représente une réactance commandée par thyristor et
- réduction des fluctuations de tension à l'aide d'un VSC (10), qui représente un redresseur commandé en tension,
- subdivision du signal de mesure du courant ou d'une grandeur correspondante, en fonction d'une valeur limite absolue donnée à l'avance, en une première partie et en une deuxième partie,
- commande du TCR (8) à l'aide de la première partie et
- commande du VSC (10) à l'aide de la deuxième partie, la valeur limite absolue donnée à l'avance représentant une fréquence limite, toutes les fréquences de la première partie étant inférieures à la fréquence limite et toutes les fréquences de la deuxième partie étant supérieures à la fréquence limite, **caractérisé en ce que** la fréquence limite est comprise entre 0 et 8 Hz.

2. Dispositif de compensation pour réduire les fluctuations de tension dans un réseau (2) d'alimentation, provoquées par le fonctionnement d'une charge (1) sur le réseau (2) d'alimentation, comprenant
- un dispositif de mesure pour mesurer un courant entre la charge (1) et le réseau (2) d'alimentation, en mettant à dispositif ainsi un signal de mesure de courant correspondant,
- un TCR (8), qui représente une réactance commandée par thyristor, pour réduire les fluctuations de tension et
- un VSC (10), qui représente un redresseur commandé en tension, pour réduire les fluctuations de tension,
- un dispositif (22, 23, 27, 28, 27', 28') de dédoublement pour subdiviser le signal de mesure du courant ou une grandeur correspondante, en fonction d'une valeur limite absolue donnée à l'avance, en une première partie et en une deuxième partie,
- un premier dispositif (17) de commande pour commander le TCR (8) à l'aide de la première partie et
- un deuxième dispositif (18) de commande pour commander le VSC (10) à l'aide de la deuxième partie, le dispositif (22, 23, 27, 28, 27', 28') de dédoublement a un dédoubleur de fréquence et la valeur limite absolue donnée à l'avance est une fréquence limite du dédoubleur de fréquence et toutes les fréquences de la première partie sont inférieures à la fréquence limite et toutes les fréquences de la deuxième partie sont supérieures à la fréquence limite, **caractérisé en ce que** la fréquence limite est comprise entre 0 et 8 Hz.

3. Procédé suivant l'une des revendications 1, dans lequel on mesure une tension du réseau (2) d'alimentation, de manière à effectuer la réduction des fluctuations de tension également en fonction de la tension mesurée.

4. Dispositif de compensation suivant la revendication 2, dans lequel le réseau (2) d'alimentation est chargé par un circuit (15) de filtre, qui, pour la réduction des fluctuations de tension, coopère avec le TCR (8) et le VSC (10).

5. Dispositif de compensation suivant la revendication 4, dans lequel le circuit (15) de filtre est passif, agit capacitivement et est adapté au TCR (8) ainsi qu'au VSC (10).
